**Europäisches Patentamt**

**European Patent Office**

**Office européen des brevets**

(19)

(11) Veröffentlichungsnummer: **0 087 618**

**A1**

(12) ## EUROPÄISCHE PATENTANMELDUNG

(21) Anmeldenummer: **83101152.3**

(22) Anmeldetag: **07.02.83**

(51) Int. Cl.³: **H 01 H 47/32**

(30) Priorität: **18.02.82 AT 620/82**

(43) Veröffentlichungstag der Anmeldung:
**07.09.83 Patentblatt 83/36**

(84) Benannte Vertragsstaaten:
**AT CH DE FR LI NL**

(71) Anmelder: **SIEMENS AKTIENGESELLSCHAFT**
**Berlin und München Wittelsbacherplatz 2**
**D-8000 München 2(DE)**

(72) Erfinder: **Rohn, Klaus**
**Sieveringerstrasse 79 B**
**A-1190 Wien(AT)**

(54) Energiesparende Ansteuerschaltung für Relais in Geräten mit einem Ladekondensator, insbesondere Tonfrequenz-Rundsteuerempfänger.

(57) Bei der erfindungsgemäßen Ansteuerschaltung sind eine Relaiswicklung (7), die Schaltstrecke eines Schalttransistors (8) und ein Gegenkopplungswiderstand (10) in Reihe geschaltet. Damit erfolgt der Stromfluß sowohl des Ansteuerstromes aus einem Elektronikteil als auch des gesteuerten Schaltstromes aus der Relaiswicklung (7) durch den Gegenkopplungswiderstand (10). Der das Relais (7) ansteuernde Schalttransistor (8) wird also in einer Stromgegenkopplungsschaltung betrieben, so daß der durch das Relais (7) fließende Strom wegen der vorgegebenen Spannung an der Basis des Schalttransistors (8) vom Widerstand der Relaiswicklung (7) weitgehend unabhängig wird. Damit wird bei jeder Relaisbetätigung dem Ladekondensator (6) eine definierte, von der Umgebungstemperatur unabhängige Ladung entnommen. Die erfindungsgemäße Ansteuerschaltung kann daher energiesparend aufgebaut werden.

FIG 1

EP 0 087 618 A1

Energiesparende Ansteuerschaltung für Relais in Geräten
mit einem Ladekondensator, insbesondere Tonfrequenz-
Rundsteuerempfänger

Die Erfindung betrifft eine Ansteuerschaltung für mindestens ein Relais in Geräten mit einem Ladekondensator,
insbesondere für Tonfrequenz-Rundsteuer-Empfänger, bei
der die Relaiswicklung und die gesteuerte Strecke eines
Schalttransistors in Reihe geschaltet sind.

Rundsteuerempfänger besitzen üblicherweise ein oder mehrere über Transistoren angesteuerte, vorwiegend bistabile
Relais. Die Versorgungsspannung der gesamten Elektronikschaltung wird an einem Ladekondensator abgenommen. Aus
Kostengründen erfolgt die Spannungsversorgung aus dem
Netz häufig über Netzteile niedriger Ausgangsleistung,
beispielsweise sogenannte "Kondensator-Netzteile", d.h.
Vorschaltkondensatoren, wodurch für den Ladekondensator
eine Quelle relativ hohen Innenwiderstandes wirksam wird.
In der üblichen Ansteuerschaltung liegt die Relaiswicklung in Serie mit der Kollektor-Emitterstrecke eines
Transistors direkt oder in Serie mit einer Diode am
Ladekondensator. Durch den Schaltimpuls wird die Kollektor-Emitterstrecke leitend und es fließt während der
Dauer des Schaltimpulses ein Strom, welcher entsprechend
der Spannung am Ladekondensator im wesentlichen vom Widerstand der Relaiswicklung bestimmt wird. Rundsteuerempfänger müssen für einen sehr weiten Umgebungstemperaturbereich ausgelegt sein, üblicherweise $-20^{\circ}C...+60^{\circ}C$.
In diesem Temperaturbereich ändert sich der Wicklungswiderstand etwa wie 1:1,3. Da die Wicklung so ausgelegt
sein muß, daß die zum Ansprechen des Relais notwendige
AW-Zahl auch im ungünstigsten Fall, d.h. bei der höchsten
Temperatur erreicht wird, ergibt sich bei niedrigen Temperaturen zwangsläufig ein bis zu 30% über dem für das
Ansprechen notwendigen Wert liegender Stromfluß bzw.
eine im gleichen Ausmaß überhöhte Energieentnahme aus
dem Ladekondensator.

Die erhöhte Energieentnahme ist aus mehreren Gründen
unerwünscht und nachteilig und zwar:
- Wenn der Rundsteuerempfänger mehrere Relais besitzt,
  so müssen diese in kurzer Folge nacheinander ansprechen
  können. Entnimmt nun das zuerst ansprechende Relais dem
  Ladekondensator mehr Strom als notwendig, so ist, bedingt durch den erwähnten hohen Innenwiderstand beispielsweise eines Kondensator-Netzteiles, ein rasches
  Nachladen des Ladekondensators nicht gewährleistet und
  für die später folgenden Relais steht zu wenig Energie
  zur Verfügung bzw. es muß zur Vermeidung von Störungen
  der Vorschaltkondensator entsprechend größer dimensioniert werden, was unwirtschaftlich ist.

- Aus Gründen der Betriebssicherheit ist erwünscht, daß
  weitere Schaltbefehle auch dann ausgeführt werden können, wenn nach dem Schaltbefehl für das erste Relais
  während des laufenden Telegrammes sehr kurze Netzspannungsausfälle in den Pausen zwischen den weiteren
  Schaltbefehlen auftreten und damit die Nachlademöglichkeit für den Nachladekondensator stark vermindert ist.

- In bestimmten Anwendungsfällen sollen bei Netzausfall alle bipolaren Relais in eine vorbestimmte Stellung gebracht werden.

Auch hier ist es wünschenswert, daß die Relais mit einem Minimum an Energie auskommen, um den Ladekondensator nicht unnötig groß dimensionieren zu müssen.

Herkömmliche Schaltungen verwenden temperaturabhängige Widerstände, insbesondere NTC-Widerstände zur Kompensation der Umgebungstemperatur. Bei Verwendung eines NTC-Widerstandes ist es ein Nachteil, nicht bei allen geforderten Umgebungstemperaturen einen nahezu konstanten Relaisstrom zu erzeugen. Weitere herkömmliche Schaltungen gleichen die Nachteile des erhöhten Stromverbrauches bei niedrigen Temperaturen durch entsprechend aufwendige Bemessung der Bauelemente aus.

Der Erfindung liegt die Aufgabe zugrunde, unter Vermeidung der angeführten Nachteile eine wirtschaftliche und auch energiesparende Ansteuerschaltung für mehrere Relais, deren Relaiswicklungen von einem Ladekondensator gespeist sind, zu entwickeln, wobei der Bauteileaufwand im Sinne einer Großserie gering und nicht justieranfällig sein soll.

Diese Aufgabe wird erfindungsgemäß dadurch gelöst, daß ein Gegenkopplungswiderstand in die Serienschaltung von Relaiswicklung und Schaltstrecke des Schalttransistors eingefügt ist, wobei der Stromfluß sowohl des Ansteuerstromes aus einem Elektronikteil als auch des gesteuerten Schaltstromes aus der Relaiswicklung durch den Gegenkopplungswiderstand erfolgt. Vorteilhaft ist hier, daß aus einer Einrichtung, der eine bestimmte Ladungsmenge pro Zeiteinheit zugeführt wird durch die Relaisbetätigung eine definierte Ladungsmenge entnommen wird, die von der Umgebungstemperatur unabhängig ist.

Erfindungsgemäß wird nämlich die Entnahme unnötig großer Energiemengen aus dem Ladekondensator verhindert, da der das Relais ansteuernde Schalttransistor in einer Stromgegenkopplungsschaltung betrieben und dadurch der durch das Relais fließende Strom wegen der vorgegebenen Spannung an der Basis vom Widerstand der Relaiswicklung weitgehend unabhängig wird und durch die vom Elektronikteil her vorgegebene genaue Impulsdauer ist die entnommene Ladungsmenge definiert.

Die erfindungsgemäße Schaltung stellt eine geschaltete Konstantstromquelle dar.

Nach einer weiteren vorteilhaften Ausgestaltung der Erfindung ist vorgesehen, wenn das verwendete Relais ein bistabiles Relais mit zwei Wicklungen ist, und deren Ansteuerung durch je einen Schalttransistor erfolgt, daß beide Schalttransistoren an einen gemeinsamen Gegenkopplungswiderstand angeschlossen sind. Vorteilhaft ist hier die Bauteileeinsparung.

Nach einer zusätzlichen vorteilhaften Ausgestaltung der Erfindung ist vorgesehen, daß der das Relais steuernde Schalttransistor Teil einer integrierten Schaltung, z.B. eines Operationsverstärkers ist. Hier kommen die Vorteile der integrierten Schaltungstechnik zum Tragen.

Ausführungsbeispiele der Erfindung sind in der Zeichnung dargestellt und werden im folgenden näher beschrieben. Es zeigen

Fig. 1  die grundsätzliche Schaltung für ein monostabiles Relais,

Fig. 2  ein Ausführungsbeispiel mit einem bistabilen Relais und

Fig. 3  eine Variante, in der ein bistabiles Relais anstelle von Transistoren von Operationsverstärkern angesteuert wird.

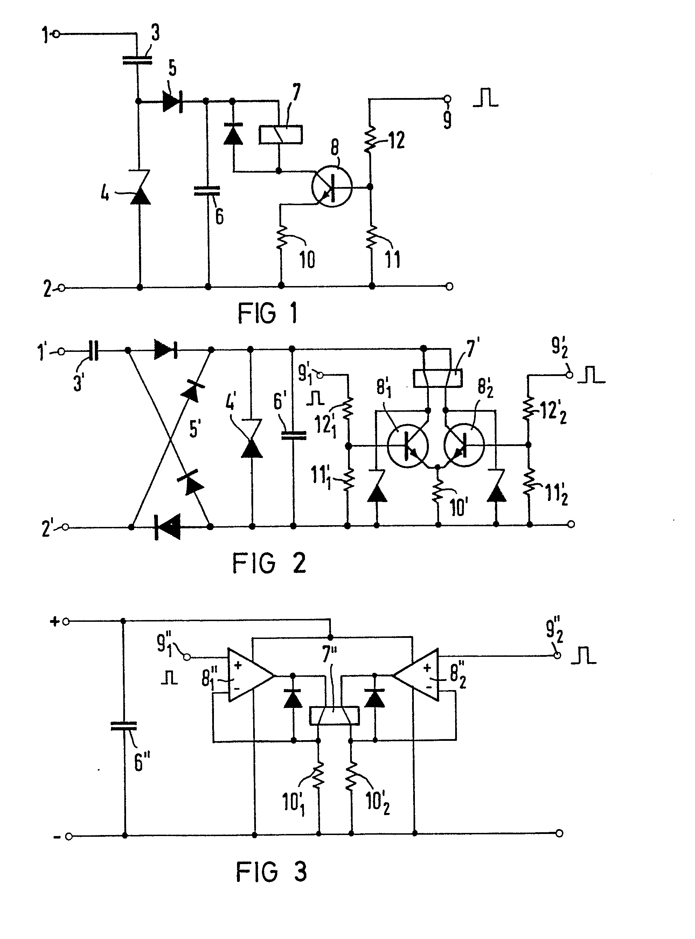

In der erfindungsgemäßen Schaltung nach Fig. 1 ist mit den Netzklemmen 1, 2 ein Kondensatornetzteil, bestehend aus einem an Klemme 1 angeschlossenen Kondensator 3, einem daran angeschlossenen Gleichrichter 5 sowie einer an Klemme 2 angeschlossenen Zenerdiode 4 verbunden, wobei der Gleichrichter 5 im weiteren über einen Ladekondensator 6 mit der im allgemeinen an die an den Nulleiter angeschlossenen Klemmen 2 verbunden ist. Erfindungsgemäß ist dem Ladekondensator 6 die Relaiswicklung eines Relais 7 und weiter die Kollektor-Emitterstrecke eines Schalttransistors 8 mit einem emitterseitigen Gegenkopplungswiderstand 10 parallel geschaltet. Die Basis des Schalttransistors 8 ist mit dem Teilerpunkt eines, an einen die Ansteuerimpulse liefernden Elektronikteil angeschlossenen, Spannungsteilers, bestehend aus einem gegen Masse (Klemme 2) geschalteten Widerstand 11 und einem gegen eine Klemme 9 geschalteten Widerstand 12 verbunden.

Die Netzspannung liegt an den Klemmen 1 und 2. Der Kondensator 3 bildet den kapazitiven Vorwiderstand für die Gesamtschaltung. Am Ladekondensator 6 tritt die vom Gleichrichter 5 gleichgerichtete und mit der Zenerdiode 4 stabilisierte Gleichspannung auf, an welcher die Relaiswicklung des Relais 7 in Reihe mit der Kollektor-Emitterstrecke des Transistors 8 und einem Gegenkopplungswiderstand 10 liegt. Der Schaltimpuls kommt über die Klemme 9 und entsprechende Widerstände 11, 12 an die Basis des Schalttransistors 8. Der Gegenkopplungswiderstand 10 wird nicht nur von dem über die Basis-Emitterstrecke fließenden Steuerstrom, sondern auch von dem über die Kollektor-Emitterstrecke fließenden Schaltstrom durchflossen, wodurch eine Stromgegenkopplung entsteht und der Schaltstrom erfindungsgemäß vom Widerstand der Relaiswicklung nahezu unabhängig wird.

In Fig. 2 ist eine erfindungsgemäße Ausführung mit einem bistabilen Relais 7 dargestellt. Mit den Netz-

# 0087618

- 6 -    VPA 82 P 7006 E

klemmen 1', 2' ist ein Kondensatornetzteil, bestehend aus einem an Klemme 1' angeschlossenen Kondensator 3', einem daran und an Klemme 2' angeschlossenen Gleichrichter 5' in Graetzschaltung verbunden, wobei dem Gleichrichter 5' eine Zenerdiode 4' und ein Ladekondensator 6' ausgangsseitig parallelgeschaltet sind. Erfindungsgemäß sind dem Ladekondensator 6' die beiden Relaiswicklungen eines bistabilen Relais 7' und weiter je eine Kollektor-Emitterstrecke eines Schalttransistors $8_1$', $8_2$' mit einem gemeinsamen emitterseitigen Gegenkopplungswiderstand 10' parallelgeschaltet. Die Basis der Schalttransistoren $8_1$', $8_2$' ist jeweils analog wie in Fig. 1 beschaltet an einen Elektronikteil angeschlossen.

Diese Ausführung unterscheidet sich von Fig. 1 dadurch, daß anstelle der Einweggleichrichtung eine Vollweggleichrichtung 5' dargestellt ist, vor allem aber durch die Verwendung eines bistabilen Relais 7'. Jede der beiden Relaiswicklungen wird von je einem Schalttransistor $8_1$', $8_2$' angesteuert. Die beiden Transistoren können einen gemeinsamen Gegenkopplungswiderstand 10' besitzen.

In Fig. 3 ist eine der Fig. 2 entsprechende erfindungsgemäße Ausführungsform ab einem Ladekondensator 6" dargestellt. Anstelle der Schalttransistoren $8_1$', $8_2$' finden hier Operationsverstärker $8_1$", $8_2$" zur Ansteuerung des bistabilen Relais 7" ihre Anwendung, wobei jedem Operationsverstärker $8_1$", $8_2$" ein Gegenkopplungswiderstand $10_1$", $10_2$" zugeordnet ist.

In vorteilhafter Weise ist hier sichergestellt, daß kein Schaltimpuls ausgelassen wird, weil definierten Stromverbräuchen genau definierte Erholzeiten für die Aufladung des Ladekondensators $C_6$, bzw. $C_6$' bzw. $C_6$" gegenüberstehen.

Patentansprüche

1. Ansteuerschaltung für mindestens ein Relais in Geräten mit einem Ladekondensator, insbesondere für Tonfrequenz-Rundsteuerempfänger, bei der die Relaiswicklung und die gesteuerte Strecke eines Schalttransistors in Reihe geschaltet sind, d a d u r c h   g e k e n n - z e i c h n e t , daß ein Gegenkopplungswiderstand ($10$, $10'$, $10_1"$, $10_2"$) in die Serienschaltung von Relaiswicklung und Schaltstrecke des Schalttransistors ($8$, $8_1'$, $8_2'$) eingefügt ist, wobei der Stromfluß sowohl des Ansteuerstromes aus einem Elektronikteil als auch des gesteuerten Schaltstromes aus der Relaiswicklung durch den Gegenkopplungswiderstand ($10$, $10'$, $10_1"$, $10_2"$) erfolgt.

2. Ansteuerschaltung nach Anspruch 1, wobei das verwendete Relais ein bistabiles Relais mit zwei Wicklungen ist, deren Ansteuerung durch je einen Transistor erfolgt, d a d u r c h   g e k e n n z e i c h n e t , daß beide Schalttransistoren ($8_1'$, $8_2'$) an einen gemeinsamen Gegenkopplungswiderstand ($10'$) angeschlossen sind.

3. Ansteuerschaltung nach Anspruch 1 oder 2, d a d u r c h   g e k e n n z e i c h n e t , daß der das Relais steuernde Schalttransistor ($8_1'$, $8_2'$) Teil einer integrierten Schaltung, z.B. eines Operationsverstärkers ($8_1"$, $8_2"$) ist.

0087618

1/1      82 P 7006

FIG 1

FIG 2

FIG 3

**Europäisches**
**Patentamt**

**EUROPÄISCHER RECHERCHENBERICHT**

**0087618**
Nummer der Anmeldung

EP 83 10 1152

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 896 346 (L.A. ULE) <br> * Spalte 3, Zeile 56 - Spalte 4, Zeile 43 * | 1,3 | H 01 H 47/32 |
| | --- | | |
| X | DE-A-2 906 809 (AGFA-GEVAERT) <br> * Seite 7, Absatz 2; Figur 3 * | 1 | |
| | --- | | |
| X | GB-A-2 077 543 (WESTINGHOUSE) <br> * Seite 2, Zeilen 7-25 * | 1,3 | |
| | --- | | |
| A | FR-A-2 369 675 (J.A. JALON) <br> * Seite 1, Zeilen 16-30 * | 1 | |
| | ----- | | |

RECHERCHIERTE SACHGEBIETE (Int. Cl. ³)

H 01 H 47/00

Der vorliegende Recherchenbericht wurde für alle Patentansprüche erstellt.

| Recherchenort <br> DEN HAAG | Abschlußdatum der Recherche <br> 07-06-1983 | Prüfer <br> LIBBERECHT L.A. |
|---|---|---|